Europäisches Patentamt

European Patent Office

Office européen des brevets

(19)

(11) Veröffentlichungsnummer: **0 101 591**
**B1**

(12) **EUROPÄISCHE PATENTSCHRIFT**

(45) Veröffentlichungstag der Patentschrift:
**20.04.88**

(21) Anmeldenummer: **83107757.3**

(22) Anmeldetag: **06.08.83**

(51) Int. Cl.⁴: **H 01 F 1/06,** H 01 F 1/11,
H 01 F 1/28, G 11 B 5/70,
C 09 D 5/23

(54) **Verfahren zur Herstellung von magnetischen, bindemittelhaltigen Dispersionen.**

(30) Priorität: **19.08.82 DE 3230874**

(43) Veröffentlichungstag der Anmeldung:
**29.02.84 Patentblatt 84/9**

(45) Bekanntmachung des Hinweises auf die Patenterteilung:
**20.04.88 Patentblatt 88/16**

(84) Benannte Vertragsstaaten:
**DE FR GB IT NL**

(56) Entgegenhaltungen:
**DE - A - 2 504 995**
**US - A - 4 107 385**

**PATENTS ABSTRACTS OF JAPAN, Band 6, Nr. 212**
**(P-151)[1090] 26. Oktober 1982; & JP - A - 57 117 124**
**(TOKYO SHIBAURA DENKI K.K.) 21-07-1982**

(73) Patentinhaber: **Agfa-Gevaert AG, Patentabteilung,**
**D-5090 Leverkusen 1 (DE)**

(72) Erfinder: **Gerum, Johannes, Dr., Blumenstrasse 51,**
**D-8034 Unterpfaffenhofen (DE)**
Erfinder: **Nippe, Burkhard, Dr., Krennerweg 20,**
**D-8000 München 71 (DE)**
Erfinder: **Kober, Heinrich, Dr., Georgstrasse 12,**
**D-8021 Hohenschäftlarn (DE)**

## Beschreibung

Die Erfindung betrifft ein Verfahren zur Dispergierung von nadelförmigen, ferromagnetischen Pigmenten für magnetische Aufzeichnungsträger unter Verwendung von ortho-Borsäure als Dispergator.

Es ist bereits bekannt, dass zur Erreichung von magnetischen Aufzeichnungsmedien mit hoher Aufzeichnungsdichte Magnetlacke ausreichender Stabilität und Homogenität erforderlich sind. Dies wird dadurch erreicht, dass das magnetische Pigment mit Hilfe eines geeigneten Dispergators im entsprechenden Lösungsmittel dispergiert wird. Nach Einrühren eines hochmolekularen Binders und eines Schmiermittels in die magnetische Dispersion wird der Magnetlack auf eine nichtmagnetische Unterlage aufgetragen.

Werden nun speziell solcher Art hergestellte Magnetbänder zur Archivierung von Audio- oder Videoinformationen verwandt, so zeigt sich bereits nach einer Lagerdauer von nur wenigen Jahren, dass die Aufzeichnungsqualität drastisch gesunken ist. Weiter muss damit gerechnet werden, dass die Aufzeichnung nach einigen Dekaden vollständig unbrauchbar geworden ist. Dieser Prozess wird durch Lagerung bei höherer Temperatur und hoher Luftfeuchtigkeit noch deutlich beschleunigt.

Im wesentlichen lässt sich diese Aufzeichnungsverschlechterung nach einer gewissen Lagerdauer dadurch erklären, dass die einzelnen Bandlagen durch Wechselwirkung der Magnetschichtoberfläche mit der Trägerfolie verkleben und beim Wiedergabevorgang diese hohen Haftkräfte nur durch eine Schichtzerstörung überwunden werden können.

Das Hauptreservoir dieser unerwünschten Verklebung ist im Dispergator zu finden; sei es in Form der Verunreinigungen von eingesetzten Naturstoffen wie z.B. Sojabohnen-Lecithin, oder technischen Produkten wie z.B. Phosphorsäureester, oder sei es dadurch, dass zwar reine Substanzen als Dispergatoren eingesetzt werden, diese aber nur zum Teil vom Pigment adsorbiert werden und zum anderen Teil frei in der Magnetschicht bleiben. Eine weitere Quelle dieser unerwünschten Klebstoffe ist darin zu sehen, dass die üblicherweise eingesetzten Dispergatoren nicht ausreichend stabil sind und während des Herstellungsprozesses des Magnetlackes zerstört werden.

Der Erfindung liegt daher die Aufgabe zugrunde, eine homogene, stabile magnetische Dispersion, bestehend aus Lösungsmittel, magnetischem Pigment und Dispergator, dadurch zu erreichen, dass als Dispergator eine chemisch einheitliche stabile Substanz, die vollständig und irreversibel von dem Pigment adsorbiert wird, eingesetzt wird. Auf diese Weise lassen sich u.a. Klebeeffekte, insbesondere durch Lagerung bei hoher Temperatur und Luftfeuchtigkeit vermeiden und damit magnetische Informationen über viele Jahre unbeschadet archivieren.

Diese Aufgabe wird erfindungsgemäss dadurch gelöst, dass der magnetischen Pigmentdispersion ortho-Borsäure in einer Menge von 0,2–5,0 Gewichtsteilen bezogen auf 100 Gewichtsteile des magnetischen Pigmentes zugesetzt, anschliessend gemahlen und in an sich bekannter Weise mit polymerem Bindemittel vermischt wird.

Überraschenderweise wird ortho-Borsäure von dem magnetischen Pigment fast vollständig während der Dispergierung adsorbiert, auch lässt sich freie Borsäure nur mehr in Spuren in dem anschliessend aus diesem Magnetlack gefertigten Magnetband nachweisen.

Auch mit einer chemischen Veränderung der Borsäure während der Dispergierung muss nicht gerechnet werden.

Verwendet man für die Herstellung der magnetischen Dispersion ein apolares Lösungsmittel wie z.B. Toluol, so lässt sich jedoch nur eine ungenügende Menge an ortho-Borsäure darin lösen, so dass eine homogene Dispersion nicht mehr erreicht werden kann. Diese Schwierigkeit lässt sich umgehen.

Eine ausreichende Menge der ortho-Borsäure wird zunächst in einem polaren Lösungsmittel wie z.B. Wasser oder Aceton gelöst; anschliessend wird das magnetische Pigment in diese Lösung getaucht und das Lösungsmittel wieder entfernt. Nun kann das derart mit Borsäure umhüllte magnetische Pigment auch in einem wenig polaren Lösungsmittel weiter behandelt werden.

Weiter wurde gefunden, dass die Dispergierwirkung der ortho-Borsäure durch Zusatz sehr geringer Mengen eines Codispergators, wie er üblicherweise bei der Magnetlackherstellung eingesetzt wird, weiter verbessert werden kann. Geht man jedoch über 1 Gewichtsprozent an Codispergator bezogen auf 100 Gewichtsteile des magnetischen Pigmentes hinaus, so verschlechtert sich die Dispersionsqualität wieder und es muss zusätzlich mit einer verschlechterten Langzeitstabilität gerechnet werden.

Die zur Herstellung einer magnetischen Dispersion eingesetzten magnetischen Partikel können $\alpha$-Fe$_2$O$_3$, Fe$_3$O$_4$, Kobalt-dotiertes $\gamma$-Fe$_2$O$_3$, Kobalt-dotiertes Fe$_3$O$_4$, CrO$_2$, Fe oder Fe-Legierungen wie Fe-Co, Fe-Ni und ähnliche, die bevorzugt als nadelförmige Teilchen mit einem Verhältnis der Längs- zur Querachse von 1:10 bis 1:3 eingesetzt werden.

Als Bindemittel für die Magnetpartikel können die für die Herstellung von Magnetschichten bekannten Bindemittel verwendet werden, wie z.B. Copolymere aus Vinylchlorid, Vinylacetat und Vinylalkohol, Polyvinylacetale, Copolymere aus Vinylidenchlorid und Acrylnitril oder Polyurethane, Polycarbonate, Phenoxyharze oder Epoxyharze.

Um ein gleichmässiges und reibungsarmes Laufverhalten von Magnettonträgern zu erreichen, ist die Zugabe von Gleitmitteln vor dem Beguss zweckmässig. Für diesen Zweck geeignete Substanzen sind u.a. Fettsäuren, Fettsäureester, Polysiloxane, Squalan, Polyethylen, Polyoxyethylen, flüssige Paraffine, MoS$_2$ oder Graphit. Sind die Fettsäuren oder das Polyoxyethylen chemisch über einen mehrwertigen Alkohol mit Bor verknüpft wie z. B. in DE-A-2 341 168, so verringert sich die Gleitwirkung gegenüber den freien Fettsäuren oder dem Polyoxyethylen.

Die magnetische Dispersion wird in an sich bekannter Weise auf einen nicht magnetischen Träger, der beispielsweise aus Polyethylenterephthalat, Polypropylen, Polyvinylacetat, Polycarbonat bestehen kann, aufgetragen.

Die Erfindung wird anhand von Beispielen näher erläutert.

Als Qualitätsmerkmal der Dispersion wird die Ausrichtbarkeit der magnetischen Teilchen (Quotient aus remanenter Magnetisierung und Sättigungsmagnetisierung, die Empfindlichkeit bei 10 kHz ($E_{10\,kHz}$) und die Verklebungsneigung eines Magnetbandes nach einer Lagerung von 4 Wochen bei 65°C und 95% rel. Feuchte (gemessen wird die Erhöhung der Bandabzugskraft nach der Lagerung).

Beispiel 1

Der Magnetlack wird aus folgenden Bestandteilen in den angegebenen Anteilen zubereitet:

| | |
|---|---|
| Feinteilige Eisenpartikel | 100 Gew. Teile |
| ortho-Borsäure | 1 Gew. Teil |
| Teilhydrolysiertes Copolymerisat aus Vinylchlorid und Vinylacetat | 5 Gew. Teile |
| Polyester-polyurethan | 15 Gew. Teile |
| Fettsäure | 2 Gew. Teile |
| Cyclohexanon | 150 Gew. Teile |
| Tetrahydrofuran | 150 Gew. Teile |

In 100 Gew.-Teilen Tetrahydrofuran und 50 Gew.-Teilen Cyclohexanon wird die ortho-Borsäure gelöst, mit dem feinteiligen ferromagnetischen Metallpulver vermischt und in einer Sandmühle gemahlen.

Nach dem Mahlende wird das gelöste Copolymerisat, das gelöste Esterpolyurethanharz und das Schmiermittel mit der magnetischen Dispersion vermischt.

Die Dispersion wird in bekannter Weise auf einen Träger aus Polyethylenterphthalat aufgebracht, der zu einer geeigneten Breite geschnitten wird.

Beispiel 2

Es wird das im Beispiel 1 beschriebene Verfahren angewandt, jedoch wird zusätzlich zu der ortho-Borsäure noch 0,3 Gew.-Teile Sojabohnenlecithin bezogen auf 100 Gew.-Teile des magnetischen Pigmentes in den Mahlansatz eingerührt. Die weitere Verarbeitung erfolgt wie unter Beispiel 1 beschrieben.

Beispiel 3

Es wird das im Beispiel 1 beschriebene Verfahren angewandt, jedoch wird noch der ortho-Borsäure 0,5 Gew.-Teile Ölsäure bezogen auf 100 Gew.-Teile des magnetischen Pigmentes in den Mahlansatz eingerührt. Die weitere Verarbeitung erfolgt wie unter Beispiel 1 beschrieben.

Beispiel 4

Es werden 5 Gew.-Teile ortho-Borsäure in 100 Gew.-Teilen Methanol gelöst, anschliessend werden 100 Gew.-Teile $\gamma$-$Fe_2O_3$ eingerührt. Nun wird das Lösungsmittel abgezogen und das noch feuchte Pigment 24 h bei 50°C getrocknet.

Das derart vorbehandelte Pigment wird dann wie in Beispiel 1 beschrieben weiter verarbeitet.

Vergleichsbeispiel 5

Die im Beispiel 1 beschriebenen Verfahren werden wiederholt; anstelle der ortho-Borsäure als Dispergator werden hier jedoch 4 Gew.-Teile einer Mischung aus einem primären und sekundären Phosphorsäureester des Umsetzungsproduktes von Alkylphenol und Polyethylenglycol mit Phosphorsäure zugegeben.

Die Ergebnisse der einzelnen Beispiele sind in Tabelle 1 zusammengefasst:

| Beispiel | $B_R/B_S$ | $E_{10\,kHz}$ | Klebeneigung |
|---|---|---|---|
| | – | (dB) | (mp) |
| 1. | 0,79 | + 3 | 25 |
| 2. | 0,80 | + 4 | 30 |
| 3. | 0,79 | + 3 | 35 |
| 4. | 0,79 | + 3 | 25 |
| 5. | 0,77 | 0 | 75 |

Im Vergleichsbeispiel 5 wurde ein allgemein üblicher Dispergator eingesetzt, der den üblichen Qualitätsstand für die Empfindlichkeit bei 10 kHz wiedergibt, wobei besonders die hohe Klebeneigung auffällt.

Beispiel 1 belegt die herausragende Wirkung der ortho-Borsäure als Dispergator, sowohl im Hinblick auf die Empfindlichkeit hoher Frequenzen als auch die Klebeneigung.

Beispiel 2 und 3 belegen den positiven Einfluss von Codispergatoren auf die hochfrequente Empfindlichkeit, wenn auch speziell nach Zusatz von Ölsäure eine stärkere Verklebungsneigung derart gefertigter Magnetbänder zu sehen ist. Mehr als 1 Gew.-Teil der ortho-Borsäure auf 100 Gew.-Teile des magnetischen Pigmentes können nur erfolgreich in die Receptur gebracht werden, wenn das einzumischende Pigment von vornherein mit einer Borsäureschicht aus einem polaren Medium heraus – wie in Beispiel 4 ausgeführt – überzogen wurde.

**Patentansprüche**

1. Verfahren zur Herstellung von magnetischen, bindemittelhaltigen Dispersionen dadurch gekennzeichnet, dass zur Mahlung der magnetischen Pigmentdispersion ortho-Borsäure in einer Menge von 0,2 bis 5,0 Gew.Teile bezogen auf 100 Gew.Teile magnetischer Pigmente zugesetzt wird.

2. Verfahren nach Anspruch 1 dadurch gekennzeichnet, dass das magnetische Pigment mit ortho-Borsäure gelöst in einem polaren Lösungsmittel in einer Menge von 0,2 bis 4,0 Gew.Teile bezogen auf 100 Gew.Teile Pigment umhüllt wird und anschliessend in Gegenwart von wenig polarem Lösungsmittel gemahlen wird.

3. Verfahren nach Anspruch 2 dadurch gekennzeichnet, dass als polares Lösungsmittel Wasser, Methanol oder Aceton verwendet wird.

4. Verfahren nach Anspruch 2 dadurch gekennzeichnet, dass als apolares bzw. wenig polares Lösungsmittel Toluol, Tetrahydrofuran verwendet wird.

5. Verfahren nach Anspruch 1 und 2 dadurch gekennzeichnet, dass zusätzlich zu der ortho-Borsäure als weiterer Dispergator 0,1 bis 2,0 Gew.Teile Lecithin bezogen auf 100 Gew.Teile des magnetischen Pigmentes zugesetzt wird.

## Claims

1. Process for the production of magnetic, binder-containing dispersions, characterised in that orthoboric acid is added in a quantity of 0.2 to 5.0 parts by weight, based on 100 parts by weight of magnetic pigments, for the grinding of the magnetic pigment dispersion.

2. Process according to Claim 1, characterised in that the magnetic pigment is coated with orthoboric acid dissolved in a polar solvent in a quantity of 0.2 to 4.0 parts by weight, based on 100 parts by weight of pigment, and is then ground in the presence of an only slightly polar solvent.

3. Process according to Claim 2, characterised in that water, methanol or acetone is used as the polar solvent.

4. Process according to Claim 2, characterised in that toluene or tetrahydrofuran is used as the non-polar or only slightly polar solvent.

5. Process according to Claim 1 and 2, characterised in that 0.1 to 2.0 parts by weight of lecithin, based on 100 parts by weight of the magnetic pigment, are added as a further dispersing agent in addition to orthoboric acid.

## Revendications

1. Procédé pour la fabrication de dispersions magnétiques contenant un liant, caractérisé en ce que l'on ajoute pour le broyage de la dispersion de pigment magnétique de l'acide orthoborique en quantité de 0,2 à 5,0 parties en poids pour 100 parties en poids de pigments magnétiques.

2. Procédé selon la revendication 1, caractérisé en ce que le pigment magnétique est enrobé par de l'acide orthoborique dissous dans un solvant polaire en quantité de 0,2 à 4,0 parties en poids pour 100 parties en poids de pigment et ensuite broyé en présence d'un solvant peu polaire.

3. Procédé selon la revendication 2, caractérisé en ce que l'on utilise comme solvant polaire l'eau, le méthanol ou l'acétone.

4. Procédé selon la revendication 2, caractérisé en ce que l'on utilise comme solvant apolaire ou peu polaire le toluène ou le tétrahydrofuranne.

5. Procédé selon les revendications 1 et 2, caractérisé en ce que l'on ajoute comme dispersant supplémentaire en plus de l'acide orthoborique 0,1 à 2,0 parties en poids de lécithine, pour 100 parties en poids du pigment magnétique.